# EUROPEAN PATENT SPECIFICATION

(11) **EP 3 787 910 B1**
(45) Date of publication and mention of the grant of the patent: **26.07.2023**
(21) Application number: 19724006.2
(22) Date of filing: 01.05.2019
(51) Int. Cl.: B60R 1/00, G06T 7/277, G01C 11/06, B60D 1/36, B60D 1/62, G01C 21/16, G01C 11/00, G01C 11/28, G01C 11/16, G06T 17/00

(54) **REAL-TIME TRAILER COUPLER LOCALIZATION AND TRACKING**
ORTUNG UND VERFOLGUNG EINER ANHÄNGERKUPPLUNG IN ECHTZEIT
LOCALISATION ET SUIVI D'ATTELAGE DE REMORQUE EN TEMPS RÉEL

(30) Priority: 01.05.2018 US 201862665269 P; 30.04.2019 US 201916399857
(43) Date of publication of application: 10.03.2021
(73) Proprietor: Continental Autonomous Mobility US, LLC, Auburn Hills, Michigan 48326 (US)
(72) Inventor: RAMIREZ LLANOS, Eduardo Jose, Auburn Hills, Michigan 48326 (US)
(74) Representative: Continental Corporation
(86) International application number: PCT/US2019/030260
(87) International publication number: WO 2019/213306

(56) References cited:
- EP-A1- 3 086 196
- EP-A1- 3 171 334
- WO-A1-2017/220705
- CN-U- 205 426 175
- DE-A1-102016 210 376
- GB-A- 2 554 427
- US-A1- 2015 321 666
- US-A1- 2016 039 456
- US-A1- 2016 086 333
- US-A1- 2016 110 878
- US-A1- 2017 174 022

## Description

### TECHNICAL FIELD

This disclosure relates to a method and device for real-time coupler localization and tracking.

### BACKGROUND

Trailers are usually unpowered vehicles that are pulled by a powered tow vehicle. A trailer may be a utility trailer, a popup camper, a travel trailer, livestock trailer, flatbed trailer, enclosed car hauler, and boat trailer, among others. The tow vehicle may be a car, a crossover, a truck, a van, a sports-utility-vehicle (SUV), a recreational vehicle (RV), or any other vehicle configured to attach to the trailer and pull the trailer. The trailer may be attached to a powered vehicle using a trailer hitch. A receiver hitch mounts on the tow vehicle and connects to the trailer hitch to form a connection. The trailer hitch may be a ball and socket, a fifth wheel and gooseneck, or a trailer jack. Other attachment mechanisms may also be used. In addition to the mechanical connection between the trailer and the powered vehicle, in some examples, the trailer is electrically connected to the tow vehicle. As such, the electrical connection allows the trailer to take the feed from the powered vehicle's rear light circuit, allowing the trailer to have taillights, turn signals, and brake lights that are in sync with the lights of the powered vehicle.

There are known from prior art a series of documents referring to localizing and tracking a trailer coupler. For example, US 2015/0321666 A1 discloses a system and a method for assisting in coupling a tow vehicle to a trailer, wherein the tow vehicle comprises a first coupling and a controller in communication with a camera positioned on a back portion of the tow vehicle, and wherein the trailer comprises a second coupling. The method comprises receiving at the controller images from the camera. The controller determines a region of interest within the received images, the region of interest including a representation of a trailer hitch. Further on, the controller determines a path based on a coupler location of the trailer hitch, wherein the controller sends instructions to a drive system supported by the tow vehicle. The instructions cause the tow vehicle to autonomously maneuver along the path towards the first coupling location.

DE 10 2016 210 376 A1 discloses a method for autonomously aligning a tow hitch ball on a tow vehicle and a trailer drawbar on a trailer through a human-machine interface (HMI) assisted visual servoing process. The method includes providing rearview images from a rearview camera, touching the tow ball on a display to register a location of the tow ball in the image and touching the drawbar on the display to register a location of a target where the tow ball will be properly aligned with the drawbar. The method provides a template pattern around the target on the image and autonomously moves the tow vehicle so that the tow ball moves towards the target. The method predicts a new location of the target as the tow vehicle moves and identifies the target in new images as the tow vehicle moves by comparing the previous template pattern with an image patch around the predicted location. GB 2 554 427 A discloses a method and a corresponding device for detecting a trailer by means of at least one camera being mounted to a vehicle and having a rearward field of view. Images received from the camera are displayed to a user on a touch-screen, wherein a user input via the touch-screen is recognized and at least a portion of the trailer is detected by means of image processing based on the user input. The user may be prompted or requested for an input, in which the user may select a region, area or point of the image, which then becomes a region of interest for image processing. EP 3 086 196 A1 discloses a method for generating scaled terrain information by at least one camera for capturing images of the environment, particularly of the terrain, and either applying a simultaneous localization and mapping (SLAM) algorithm or a stereo photogrammetry algorithm to the set of image data captured by the camera. WO 2017/220705 A1 refers to a control system for a vehicle, the system comprising a processing means arranged to receive, from terrain data capture means arranged to capture data in respect of terrain ahead of the vehicle by means of one or more sensors, terrain information indicative of the topography of an area extending ahead of the vehicle. The processing means is configured to perform a segmentation operation on image data defining one said at least one 2D image and identify in the image data edges of a predicted path of the vehicle, to calculate a 3D point cloud dataset in respect of the terrain ahead of the vehicle based on the terrain information, and to determine the 3D coordinates of lateral edges of the predicted path of the vehicle by reference to the point cloud dataset, based on the coordinates of edges of the predicted path identified in the 2D image, to determine a 3D predicted path of the vehicle.

Recent advancements in sensor technology have led to improved safety systems for vehicles. As such, it is desirable to provide a system that is capable of identifying a coupler of a trailer positioned behind a tow vehicle in real-time and localizing the coupler which allows the tow vehicle to autonomously maneuver towards the trailer for automated hitching.

### SUMMARY

The invention is set out in the appended set of claims.

According to the invention, a method of detecting and localizing a trailer coupler of a trailer is provided. The method includes: receiving, at data processing hardware, images from a camera positioned on a back portion of a tow vehicle and in communication with the data processing hardware. The method also includes determining, by the data processing hardware, a region of interest within the images. The region of interest includes a representation of the trailer coupler. The method also includes determining, by the data processing hardware, a camera plane where the camera moves based on the received images. In addition, the method includes determining, by the data processing hardware, a road plane based on the received images. The method also includes determining, by the data processing hardware, a three-dimensional (3D) point cloud representing objects inside the region of interest and within the camera plane and the road plane. The method includes receiving, at the data processing hardware, sensor data from at least one of wheel encoder, acceleration and wheel angle sensors, and an inertial measurement unit in communication with the data processing hardware. The method includes determining, at the data processing hardware, a coupler location of the trailer coupler based on the 3d point cloud and the sensor data. The coupler location is in real world coordinates. Additionally, the method includes sending, from the data processing hardware to a drive system, instructions causing the tow vehicle to autonomously drive along a path in a rearward direction towards the coupler location. The method further includes: projecting, by the data processing hardware, points associated with the 3D point cloud onto the camera plane or the road plane. The method includes determining, by the data processing hardware, a distance between each point and the camera. When the points associated with the 3D point cloud are projected onto the camera plane, the method includes determining the distance between each point and a center of the camera. When the points associated with the 3D point cloud are projected onto the road plane, the method includes determining the distance between each point and a projection of the center of the camera onto the road plane. The method also includes determining, by the data processing hardware, a shortest distance based on the determined distances, where a projection of the 3D point associated with the shortest distance onto the received images is representative of a coupler pixel location within the images. The coupler location is based on the coupler pixel location.

Implementations of the disclosure may include one or more of the following optional features. In some implementations, determining the region of interest within the images includes: sending, from the data processing hardware to a display, instructions to display the received images; and receiving, at the data processing hardware, a user selection of the region of interest.

In some examples, the method further includes: determining, by the data processing hardware, a coupler height based on a distance between the 3D point associated with the shortest distance and the road plane. The coupler location includes the coupler height.

The method may further include: determining, by the data processing hardware, a first distance between the trailer coupler and the camera based on the 3D point cloud; and determining, by the data processing hardware, a second distance between the trailer coupler and a vehicle tow ball based on the first distance less than a longitudinal distance between the camera and a vehicle hitch ball. The path is based on the second distance.

In some implementations, determining the point cloud of the region of interest includes executing one of a visual odometry (VO) algorithm, a simultaneous localization and mapping (SLAM) algorithm, and a structure from motion (SfM) algorithm.

Determining the camera plane may include: determining, by the data processing hardware, at least three three-dimensional positions of the rear camera from the received image; and determining, by the data processing hardware, the camera plane based on the at least three three-dimensional positions. In some examples determining the road plane includes: determining a height of the camera from a road supporting the tow vehicle; and shifting the camera plane by the height of the camera.

In some implementations, determining the road plane includes: extracting, by the data processing hardware, at least three feature points from the images including a road; and associating, by the data processing hardware, a point of the 3D point cloud with each of the feature points. Additionally, determining the road plane may include determining, by the data processing hardware, the road plane based on the at least three points of the 3D point cloud associated with the at least three feature points. In some examples, determining the camera plane includes: determining, by the data processing hardware, a height of the camera from the road and shifting, by the data processing hardware, the road plane by the height of the camera.

Another aspect of the invention provides a system for detecting and localizing a trailer coupler of a trailer. The system includes: data processing hardware; and memory hardware in communication with the data processing hardware. The memory hardware stores instructions that when executed on the data processing hardware cause the data processing hardware to perform operations that include the method described above.

The details of one or more implementations of the disclosure are set forth in the accompanying drawings and the description below. Other aspects, features, and advantages will be apparent from the description and drawings, and from the claims.

### DESCRIPTION OF DRAWINGS

FIG. 1 is a schematic top view of an exemplary tow vehicle positioned in front of trailers.
FIG. 2 is a schematic view of the exemplary tow vehicle shown in FIG. 1.
FIG. 3 is a schematic side view of the exemplary tow vehicle and a selected trailer of FIG. 1.
FIG. 4A is a perspective view of the tow vehicle and the trailer showing a captured image and the region of interest.
FIG. 4B is a perspective view of the semi-dense or dense point cloud for a region of interest within a captured image.
FIG. 5A is a perspective view of the tow vehicle and the trailer showing a captured image, the region of interest, and a minimum region of interest.
FIG. 5B is a perspective view of the tow vehicle and the trailer showing a captured image, the region of interest, and a minimum region of interest.
FIG. 6 is a schematic view of an exemplary arrangement of operations for detecting and localizing a coupler of a trailer hitch associated with a trailer behind a tow vehicle.

Like reference symbols in the various drawings indicate like elements.

### DETAILED DESCRIPTION

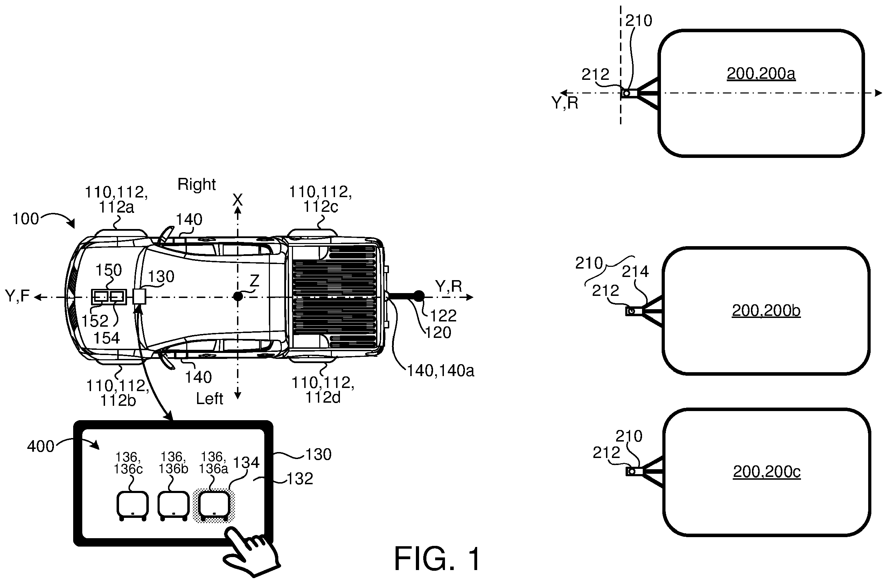

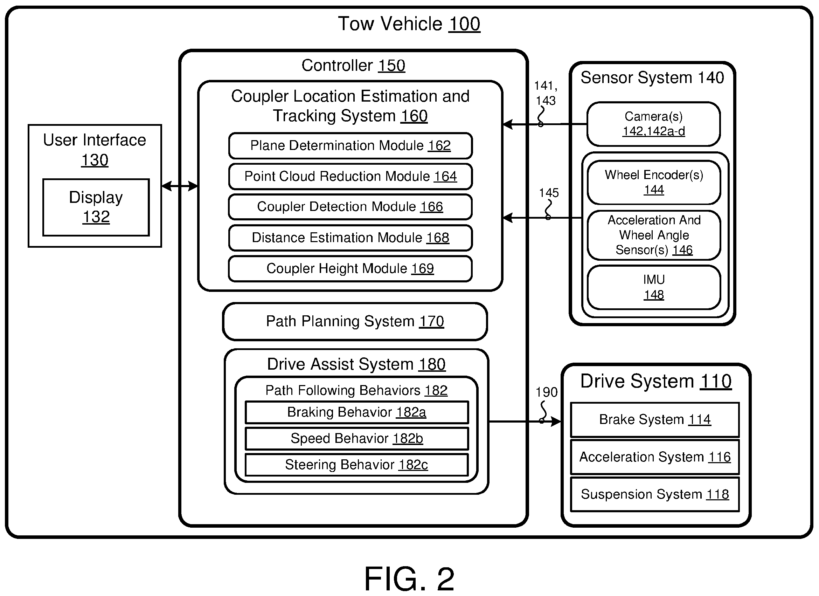

Referring to FIGS. 1 and 2, a tow vehicle 100, such as, but not limited to a car, a crossover, a truck, a van, a sports-utility-vehicle (SUV), and a recreational vehicle (RV) may be configured to hitch to and tow a trailer 200. The tow vehicle 100 connects to the trailer 200 by way of a tow vehicle hitch 120 having a vehicle hitch ball 122 connecting to a trailer hitch 210 having a trailer coupler 212. It is desirable to have a tow vehicle 100 that is capable of autonomously backing up towards a trailer 200 identified from one or more representations 136, 136 a-c of trailers 200, 200a-c displayed on a user interface 130, such as a user display 132. In addition, it is also desirable to have a coupler location estimation and tracking system 160 supported by the tow vehicle 100 that is capable of executing an algorithm that tracks and estimates the position of the coupler 212 associated with the trailer 200 in real time. Therefore, the coupler location estimation and tracking system 160 automates the hitching process of the tow vehicle 100 to the trailer 200. The coupler location estimation and tracking system 160 may use a single camera 142a and at least one of the following sensors: wheel encoders 144, acceleration and wheel angle sensors 146, and an Inertial Measurement unit (IMU) 148 to determine a position of the coupler 212 in pixel coordinates within an image 143 as well as the coupler position in the three-dimensions (3D) world.

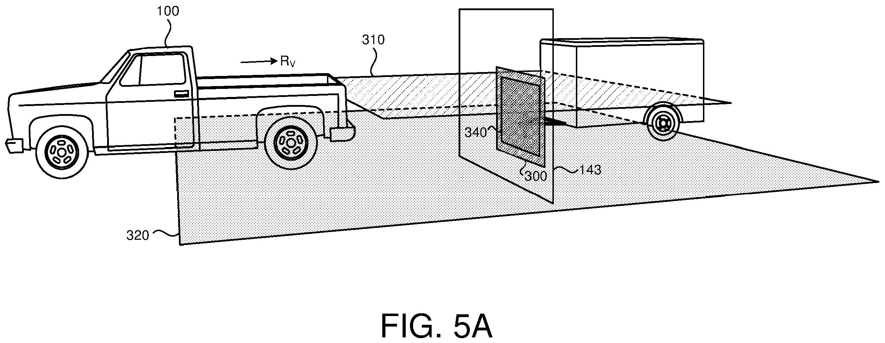

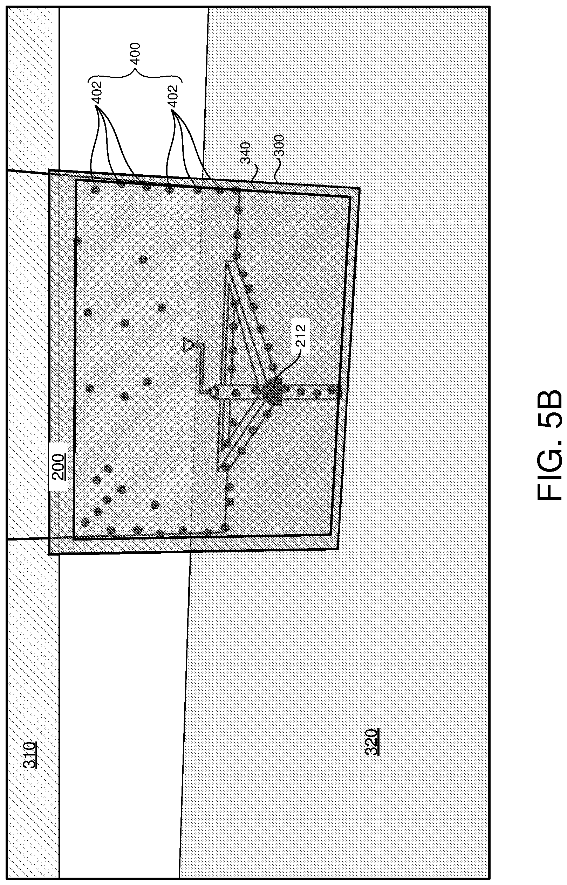

Referring to FIGS. 1-5, in some implementations, a driver of a tow vehicle 100 wants to tow a trailer 200 positioned behind the tow vehicle 100. The tow vehicle 100 may be configured to receive an indication of a driver selection 134 associated with a representation of a selected trailer 200, 200a-c. In some examples, the driver maneuvers the tow vehicle 100 towards the selected trailer 200, 200a-c, while in other examples, the tow vehicle 100 autonomously drives towards the selected trailer 200, 200a-c. The tow vehicle 100 may include a drive system 110 that maneuvers the tow vehicle 100 across a road surface 10 based on drive commands having x, y, and z components, for example. As shown, the drive system 110 includes a front right wheel 112, 112a, a front left wheel 112, 112b, a rear right wheel 112, 112c, and a rear left wheel 112, 112d. The drive system 110 may include other wheel configurations as well. The drive system 110 may also include a brake system 114 that includes brakes associated with each wheel 112, 112a-d, and an acceleration system 116 that is configured to adjust a speed and direction of the tow vehicle 100. In addition, the drive system 110 may include a suspension system 118 that includes tires associates with each wheel 112, 112a-d, tire air, springs, shock absorbers, and linkages that connect the tow vehicle 100 to its wheels 112, 112a-d and allows relative motion between the tow vehicle 100 and the wheels 112, 112a-d. The suspension system 118 may be configured to adjust a height of the tow vehicle 100 allowing a tow vehicle hitch 120 (e.g., a vehicle hitch ball 122) to align with a trailer hitch 210 (e.g., trailer hitch coupler 212), which allows for autonomous connection between the tow vehicle 100 and the trailer 200.

The tow vehicle 100 may move across the road surface by various combinations of movements relative to three mutually perpendicular axes defined by the tow vehicle 100: a transverse axis X, a fore-aft axis Y, and a central vertical axis Z. The transverse axis X extends between a right side and a left side of the tow vehicle 100. A forward drive direction along the fore-aft axis Y is designated as F, also referred to as a forward motion. In addition, an aft or rearward drive direction along the fore-aft direction Y is designated as R, also referred to as rearward motion. When the suspension system 118 adjusts the suspension of the tow vehicle 100, the tow vehicle 100 may tilt about the X axis and or Y axis, or move along the central vertical axis Z.

The tow vehicle 100 may include a user interface 130. The user interface 130 receives one or more user commands from the driver via one or more input mechanisms or a screen display 132 (for examples, a touch screen display) and/or displays one or more notifications to the driver. The user interface 130 is in communication with a vehicle controller 150, which is in turn in communication with a sensor system 140. In some examples, the user interface 130 displays an image of an environment of the tow vehicle 100 leading to one or more commands being received by the user interface 130 (from the driver) that initiate execution of one or more behaviors. In some examples, the user display 132 displays one or more representations 136, 136a-c of trailers 200, 200a-c positioned behind the tow vehicle 100. In this case, the driver selects a representation 136, 136a-c of a trailer 200, 200a-c causing the controller 150 to execute the coupler location estimation and tracking system 160 associated with the trailer 200, 200a-c of the selected representation 136, 136a-c. In some examples, where the user display 132 displays one representation 136, 136a-c of a trailers 200, 200a-c positioned behind the tow vehicle 100, the controller 150 may execute the coupler location estimation and tracking system 160 associated with the one trailer 200, 200a-c of the one representation 136, 136a-c automatically or upon an indication from the driver to autonomously attach to the trailer 200, 200a-c. The vehicle controller 150 includes a computing device (or processor or data processing hardware) 152 (e.g., central processing unit having one or more computing processors) in communication with non-transitory memory 154 (e.g., a hard disk, flash memory, random-access memory, memory hardware) capable of storing instructions executable on the computing processor(s) 152.

The tow vehicle 100 may include a sensor system 140 to provide reliable and robust driving. The sensor system 140 may include different types of sensors that may be used separately or with one another to create a perception of the environment of the tow vehicle 100. The perception of the environment is used for to aid the driver in making intelligent decisions based on objects and obstacles detected by the sensor system 140 or during autonomous driving of the tow vehicle 100. The sensor system 140 may include the one or more cameras 142. In some implementations, the tow vehicle 100 includes a rear camera 142a that is mounted to provide images 143 with a view of a rear-driving path for the tow vehicle 100. The rear camera 142a may include a fisheye lens that includes an ultra wide-angle lens that produces strong visual distortion intended to create a wide panoramic or hemispherical image 143. Fisheye cameras capture images 143 having an extremely wide angle of view. Moreover, images 143 captured by the fisheye camera have a characteristic convex non-rectilinear appearance. Other types of cameras may also be used to capture images 143 of the rear-driving path of the tow vehicle 100.

In some examples, the sensor system 140 also includes one or more wheel encoders 144 associated with one or more wheels 112, 112a-d of the tow vehicle 100. The wheel encoder 144 is an electro-mechanical device that converts an angular position or motion of the wheel to analog or digital output signals. Therefore, the wheel encoder 144 determines the speed and distance the wheel 112, 112a-d has traveled.

The sensor system 140 may also include one or more acceleration and wheel angle sensors 146 associated with the tow vehicle 100. The acceleration and wheel angle sensors 146 determine the acceleration of the tow vehicle 100 in the directions of the transverse axis X and fore-aft axis Y.

The sensor system 140 may also include the IMU (inertial measurement unit) 148 configured to measure the tow vehicle's linear acceleration (using one or more accelerometers) and rotational rate (using one or more gyroscopes). In some examples, the IMU 148 also determines a heading reference of the tow vehicle 100. Therefore, the IMU 148 determines the pitch, roll, and yaw of the tow vehicle 100.

The sensor system 140 may include other sensors such as, but not limited to, radar, sonar, LIDAR (Light Detection and Ranging, which can entail optical remote sensing that measures properties of scattered light to find range and/or other information of a distant target), LADAR (Laser Detection and Ranging), ultrasonic sensors, stereo cameras, etc. The wheel encoders 144, the acceleration and wheel angle sensors 146, the IMU 148, and any other sensors output sensor data 145 to the controller 150, i.e., the coupler location estimation and tracking system 160.

The vehicle controller 150 executes the coupler location estimation and tracking system 160 that receives images 143 from the rear camera 143a and sensor data 145 from at least one of the other sensors 144, 146, 148, and based on the received data, the coupler location estimation and tracking system 160 determines a location of the trailer 200, specifically, a coupler location L_{TC} of the coupler 212 associated with the trailer 200. For example, the trailer 200, 200a-c identified by the driver via the user interface 130. More specifically, the coupler location estimation and tracking system 160 determines a pixel position of the coupler 212 within the received image(s) 143. In addition, the coupler location estimation and tracking system 160 determines a 3D location L_{TC} of the coupler 212 in a three-dimensional (3D) coordinate system and in a global coordinate system. In some examples, the coupler location estimation and tracking system 160 also determines a coupler height H_{TC} of the coupler 212 with respect to the road surface 10 in the 3D coordinate system and in the global coordinate system. The coupler location estimation and tracking system 160 includes an iterative algorithm that automates the hitching and alignment process for the tow vehicle 100 and the trailer 200.

The coupler location estimation and tracking system 160 receives images 143 from the rear camera 142a. Since the coupler location estimation and tracking system 160 analyzes all sequences of images 143 received from the camera 142a instead of only one or two images 143, for example, the coupler location estimation and tracking system 160 is more robust when making its determinations relating to the coupler location L_{TC} of the coupler 212.

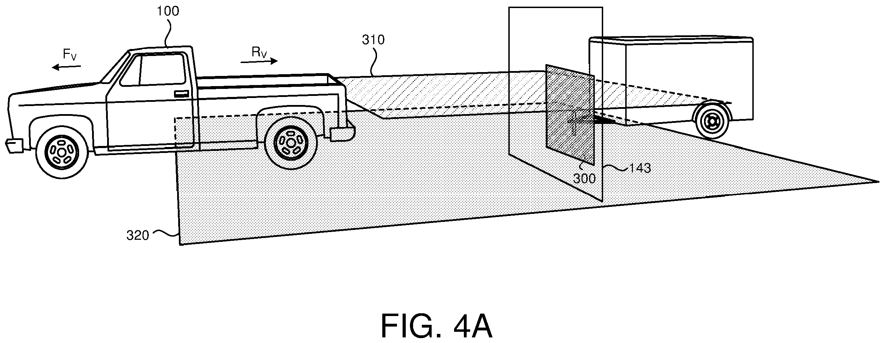

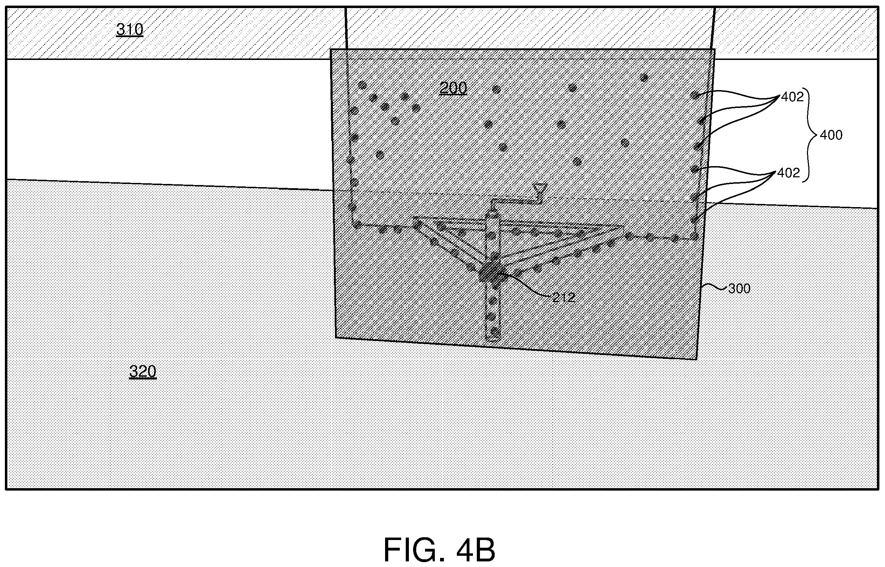

In some implementations, the coupler location estimation and tracking system 160 instructs the user interface 130 to display the received images 143 on the display 132 and solicit from the user a selection of a region of interest (ROI) 300 within the displayed image 143 (FIGS. 4A and 4B). The ROI 300 is a bounding box that includes the coupler 212. In other examples, the coupler location estimation and tracking system 160 may include a coupler identification algorithm that identifies the coupler 212 within the image 143 and bounds the coupler 212 by the bounding box being the ROI 300.

The coupler location estimation and tracking system 160 generates a semi-dense/dense point cloud of the objects within the ROI 300, for examples, the coupler 212 (FIG. 4B). A point cloud is a set of data points in 3D space, more specifically the point cloud includes a number of points on the external surface of objects.

The coupler location estimation and tracking system 160 may use one or more techniques to localize the coupler 212 in the point cloud 400. Some of these techniques include, but are not limited to, Visual Odometry (VO), Simultaneous Localization and Mapping (SLAM), and Structure from Motion (SfM). The VO, SLAM and SfM frameworks are well established theories and allow the tow vehicle 100 to localize in a real-time in a self-generated 3D point cloud map. VO is a method of determining a position and orientation of the trailer 200, the camera 142a, the coupler 212, or the tow-bar 214 by analyzing the images 143 received from the camera 142a. The VO method may extract image feature points and tracks them in the image sequence. Examples of the feature points may include, but are not limited to, edges, corners or blobs on the trailer 200, the coupler 212, or the tow-bar 214. The VO method may also use pixel intensity in the image sequence directly as visual input. The SLAM method constructs or updates a map of an unknown environment while simultaneously keeping track of one or more targets. In other words, the SLAM method uses the received images 143 as the only source of external information, to establish the position and orientation of the tow vehicle 100 and the camera 142a, while at the same time, constructs a representation of the objects in the ROI 300. The SfM method estimates the 3D structure of the objects in the ROI 300 based on the received images 143 (i.e., 2D images). The SfM method may estimate a pose of the camera 142a and the tow vehicle 100 based on the sequence of images 143 that the camera 142 captures.

In some implementations, the coupler location estimation and tracking system 160 is initialized before executing the VO method, the SLAM method or the SfM method. During a first method of initializing, the coupler location estimation and tracking system 160 sends the drive system 110 instructions or commands 190 causing the drive system 110 to move the tow vehicle 100 in a straight direction along the fore-aft axis Y, for example, in the forward drive direction F or rearward drive direction R for a predetermined distance. In some examples, the predetermined distance is a few centimeters. The predetermined distance may be between 5 centimeters to 50 centimeters. The forward F and rearward R drive movement along the fore-aft axis Y causes the SLAM or the SfM to initialize. Additionally, along the forward F and rearward R drive movement, the coupler location estimation and tracking system 160 executes a tracker algorithm to update the ROI 300 within the image 143 that was provided by the driver or determined by the coupler location estimation and tracking system 160. As the tow vehicle 100 moves in the rearward direction R, the perspective and the size of the trailer 200, tow-bar 214, and coupler 212 changes in the image 143. Therefore, the tracker algorithm updates the ROI 300 based on the new images 143 that are received from the camera 142a during the forward F and rearward R drive movement along the fore-aft axis Y. The ROI 300 includes the coupler 212, as such the feature points or pixel intensities in the ROI 300 are tracked by the coupler location estimation and tracking system 160. The ROI 300 is used to filter out objects that are not the coupler 212 in the image 143 since the coupler location estimation and tracking system 160 only analyzes the ROI 300 portion of the image 143. In some examples, the coupler location estimation and tracking system 160 constructs a visual tracker of the coupler 212 by identifying two-dimensional (2D) feature points in the ROI 300. Then the coupler location estimation and tracking system 160 identifies the 3D points within the point cloud map that correspond to the identified 2D feature points. Therefore, at every iteration of the tracking algorithm (executed by the coupler location estimation and tracking system 160), the coupler location estimation and tracking system 160 projects the selected cloud point 402 onto the 2D camera image 143. Then the coupler location estimation and tracking system 160 constructs a minimum ROI 340 that includes the projected 2D points. In this case, the coupler location estimation and tracking system 160 updates the ROI 300 while the tow vehicle is moving and generates a minimum ROI 340 that contains the previously selected cloud point 402.

In some implementations, the coupler location estimation and tracking system 160 may be initialized by sending the drive system 110 instructions 190 causing the drive system 110 to move the tow vehicle 100 for a predetermined distance towards the center of the ROI 300. In some examples, the predetermined distance is a few centimeters, for example 5 centimeters to 50 centimeters. In this case, the coupler location estimation and tracking system 160 updated the ROI 300 during the sequence or received images 143 during the maneuvers of the tow vehicle 100.

In some implementations, the coupler location estimation and tracking system 160 determines a scale of the 3D point cloud map. When the 3D point cloud map is generated by using only a mono-camera, it suffers from scale ambiguity, i.e., the map made only with monocular cameras is recoverable only up to a scale. However, if the coupler location estimation and tracking system 160 does not know the scale of the map, then the coupler location estimation and tracking system 160 may determine the scale of the map by fusing the VO, SLAM, or SfM algorithms with the vehicle sensor data 145. In another examples, the coupler location estimation and tracking system 160 determines the scale of the map based on the road plane 320 in the 3D point cloud map 400. The coupler location estimation and tracking system 160 determines the distance from the camera location to the road plane 320 in the map 400. The scale of the map 400 is given by the height of the camera 142a (from the camera data 141) divided by the distance calculated of the camera location to the road plane 320 in the map 400. A 3D point cloud map represents the environment's structure without providing details relating to the distance of the structures within the map 400. Therefore, the coupler location estimation and tracking system 160 determines the scale of the map 400 which includes the distance information, and this allows the coupler location estimation and tracking system 160 to determine the location of the coupler 212 in the world coordinate.

The coupler location estimation and tracking system 160 includes a plane determination module 162 that is configured to determine a camera plane 310 and a road plane 320. In some implementations, the plane determination module 162 determines a camera plane 310 along which the camera 142a moves and a road plane 320. To determine the camera plane 310, the plane determination module 162 uses at least three previous 3D positions of the camera 142a received from the camera 142a as camera data 141. The camera data 141 may include intrinsic parameters (e.g., focal length, image sensor format, and principal point) and extrinsic parameters (e.g., the coordinate system transformations from 3D world coordinates to 3D camera coordinates, in other words, the extrinsic parameters define the position of the camera center and the heading of the camera in world coordinates). In addition, the camera data 141 may include minimum/maximum/average height of the camera 142a with respect to ground (e.g., when the vehicle is loaded and unloaded), and a longitudinal distance between the camera 142a and the vehicle hitch ball 122. The plane determination module 162 determines the camera plane 310 based on the 3D positions of the three points of the at least three previous 3D positions of the camera 142a. In some examples, the coupler location estimation and tracking system 160 determines the road plane 320 based on the camera plane 310. In some implementations, based on the camera plane 310 and the camera data 141, the plane determination module 162 determines the road plane 320 since the road plane 320 is a shift of the camera plane 310 by the height of the camera 142a from the ground (which is provided in the camera information 141). This procedure is helpful when the three 3D points used to determine the camera plane 310 are collinear, in which case there exists infinite number of camera planes 310 that are coplanar to the line given by the 3D points.

To determine the road plane 320, the plane determination module 162 extracts at least three feature points from the captured 2D image 143 associated with the road. Following, the coupler location estimation and tracking system 160 determines the 3D position of the three feature points within the point cloud 400 and then the coupler location estimation and tracking system 160 computes the road plane 320 based on the three feature points. In some examples, the coupler location estimation and tracking system 160 determines the camera plane 310 based on the road plane 320. In some implementations, based on the road plane 320 and the camera information 141, the coupler location estimation and tracking system 160 determines the camera plane since the camera plane 310 is a shift of the road plane 320 by the height of the camera 142a from the ground (which is provided by the camera information 141).

The plane determination module 162 may determine and update the planes 310, 320 in real time as the tow vehicle 100 is autonomously moving in the rearward R direction, or if the plane determination module 162 determines that the road is flat, then the coupler location estimation and tracking system 160 may determine the planes 310, 320 only once. The above methods use three points to determine the camera plane 310 or the road plane 320. However, in some examples, the plane determination module 162 may rely on more than three points to determine a plane 310, 320. In this case, the coupler location estimation and tracking system 160 uses Least squares method, Radom Sample Consensus (RANSAC) method, Support Vector Machine (SVM) method, or any variation of these algorithms to determine the plane 310, 320. By using more than three points to determine the plane 310, 320, the plane determination module 162 increases the robustness to outliers.

The coupler location estimation and tracking system 160 includes a point cloud module reduction module 164 that is configured to reduce the size of the ROI 300. In some implementations, the coupler location estimation and tracking system 160 selects the 3D cloud points 402 corresponding to the 2D points in the image 143 that are contained in the ROI 300. Then the coupler location and estimation system 160, uses the selected 3D cloud points 402 between the two planes (the road plane 320 and the camera plane 310). The selected 3D cloud points 402 between the two planes 310, 320 are denoted as set M.

In some examples, the coupler location estimation and tracking system 160 projects the set of points in M (i.e., the selected 3D cloud points 402 between the two planes 310, 320) onto the camera plane 310 or the road plane 320. The projected extracted points are denoted as set J. Following, the coupler location estimation and tracking system 160 determines a distance from each point within the set J to a center of the camera 142a.

In some implementations, if the first method of initialization is used, the coupler location estimation and tracking system 160 updates the minimum ROI 340 by projecting the points 402 in M onto the current camera 2D image 143. Then the coupler location estimation and tracking system 160 determines an updated minimum box 340 that contains the projected points in the camera frame 143 (2D image). The coupler location estimation and tracking system 160 updates the minimum ROI 340 because when time changes or the tow vehicle 100 moves, then the perspective of the 3D points 402 with respect to the camera 142a also change in position. As such, by projecting the points 402 in the set M onto the image 143, the minimum ROI 340 is updated.

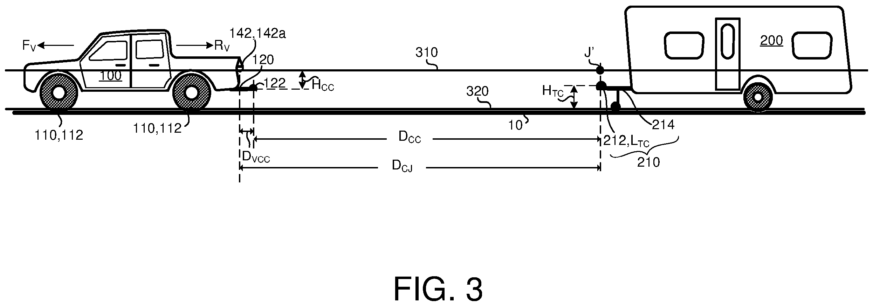

The coupler location estimation and tracking system 160 includes a coupler detection module 166 configured to detect the coupler 212 and determine the location L_{TC} of the coupler 212. The coupler location estimation and tracking system 160 selects a point J' from the set J (i.e., the projected extracted points). The point J' is indicative of a point from set J having the shortest distance between the point J' and the camera 142a. As previously mentioned, the set J is the projection of the points 402 in set M on the camera plane 310 or the road plane 320. Therefore, when the set J is projected on the camera plane 310, then the point J' is the point which is the closest to the camera center (as shown in FIG. 3). However, if the set J is projected on the road plane 320, then the point J' is the point which is closes to a projection of the camera center onto the road plane 320. In some examples, if J' includes more than one point, then the coupler location estimation and tracking system 160 determines the average or median of the points J'. The coupler location estimation and tracking system 160 determines a point from the set M associated with J' and projects the determined point from the set M onto the 2D image 143 which is indicative of a pixel location of the coupler 212 in the image.

In some implementations, the coupler detection module 166 determines the coupler location by, given a configurable integer parameter N, the coupler location estimation and tracking system 160 selects N points in the set J which are the closest to the camera center (or the projection of the camera center on the road plane). This set of point is denoted as J*. The coupler detection module 166 determines an average or median of the set of points J*. A point in the set M associated with J* projected onto the image 143 represents an estimation of the position of the trailer coupler on the image.

In some implementations, the coupler detection module 166 determines the coupler location by executing an identification algorithm to find the coupler 212 in the point cloud 400. The identification algorithm does not try to find the coupler in the image 143. The identification algorithm looks for the coupler shape in the point cloud (3D world). Other option to simplify this step is to run the identification algorithm in the camera moving plane (or the road plane) using the points in the set J.

The coupler location estimation and tracking system 160 includes a distance estimation module 168 configured to determine a distance Dcc between the trailer coupler 212 and the vehicle tow ball 122 (see FIG. 3). The distance estimation module 168 determines a first distance D_{CJ} between J' (being the minimum distance to the camera 142a) projected to the camera moving plane 310 and the camera center (or projected on the road plane 320 and the projection of the camera center). The distance estimation module 168 determines a second distance Dcc between the coupler 212 and the hitch ball 122 based on the first distance D_{CJ} less a longitudinal distance Dvcc between the camera 142a and the vehicle hitch ball 122. The second distance indicative of the distance D_{CC} between the trailer coupler 212 and the vehicle tow ball 122.

The coupler location estimation and tracking system 160 includes a coupler height module 169 that determines a height H_{TC} of the coupler 212 with respect to the road surface 10. For example, the coupler height module 169 may determine the distance between the coupler location L_{TC}, determined by the coupler detection module 166, and the road plane 320. The coupler height module 168 may use the shortest distance between the road plane 320 and the coupler (if the coupler is represented by more than one point in the point cloud, use the average point to represent the coupler) to determine the coupler height H_{TC}.

Once the coupler location estimation and tracking system 160 determines the coupler height H_{TC} and the distance D_{CC} between the trailer coupler 212 and the vehicle tow ball 122 in the global coordinate system, then the coupler location estimation and tracking system 160 may instruct the path planning system 170 to initiate planning a path. The controller 150 executes a path planning system 170. The path planning system 170 determines the path causing the tow vehicle 100 to autonomously drive in the rearward direction R towards the trailer 200 and autonomously connect with the trailer 200.

As the tow vehicle 100 is autonomously maneuvering along the planned path, the path planning system 170 continuously updates the path based on continuously receiving updated information from the coupler location estimation and tracking system 160 and the sensor system 140. In some examples, an object detection system identifies one or more objects along the planned path and sends the path planning system 170 data relating to the position of the one or more objects. In this case, the path planning system 170 recalculates the planned path to avoid the one or more objects while also executing predetermined maneuvers to follow the path. In some examples, the path planning system determines a probability of collision and if the probability of collision exceeds a predetermined threshold, the path planning system 170 adjusts the path.

Once the path planning system 170 determines the planned path, then the vehicle controller 150 executes a driver assist system 180, which in turn includes path following behaviors 182. The path following behaviors 182 receive the planned path and executes one or more behaviors 182a-b that send commands 190 to the drive system 110, causing the tow vehicle 100 to autonomously drive along the planned path, which causes the tow vehicle 100 to autonomously connect to the trailer 200.

The path following behaviors 182 include, a braking behavior 182a, a speed behavior 182b, and a steering behavior 182c. In some examples, the path following behaviors 182 also include a hitch connect behavior, and a suspension adjustment behavior. Each behavior 182a-182c causes the tow vehicle 100 to take an action, such as driving backward, turning at a specific angle, breaking, speeding, slowing down, among others. The vehicle controller 150 may maneuver the tow vehicle 100 in any direction across the road surface by controlling the drive system 110, more specifically by issuing commands 190 to the drive system 110.

The braking behavior 182a may be executed to either stop the tow vehicle 100 or to slow down the tow vehicle 100 based on the planned path. The braking behavior 182a sends a signal or command 190 to the drive system 110, e.g., the brake system (not shown), to either stop the tow vehicle 100 or reduce the speed of the tow vehicle 100.

The speed behavior 182b may be executed to change the speed of the tow vehicle 100 by either accelerating or decelerating based on the planned path. The speed behavior 182b sends a signal or command 190 to the brake system 114 for decelerating or the acceleration system 116 for accelerating.

The steering behavior 182c may be executed to change the direction of the tow vehicle 100 based on the planned path. As such, the steering behavior 182c sends the acceleration system 116 a signal or command 190 indicative of an angle of steering causing the drive system 110 to change direction.

As previously discussed, the coupler location estimation and tracking system 160 determines the position of the trailer coupler 212 and tracks the coupler 212 in real time. In addition, the determined position is based on pixels within the received images 143 and in a global reference frame. The coupler location estimation and tracking system 160 uses distances to find the coupler 212 and is configured to filter out cloud points 402 that are not between the camera moving plane 310 and the ground plane 320. As such, the coupler location estimation and tracking system 160 is feasible for real time implementation.

The coupler location estimation and tracking system 160 receives images 143 from the rear camera 142a therefore, the coupler location estimation and tracking system 160 does not need prior knowledge of the size of the hitch ball 122 or the trailer coupler 212. Additionally, the coupler location estimation and tracking system 160 does not determine the position of the coupler 212 within the images, but instead determines the ROI 300 and then determines the coupler location 212 within the 3D point cloud 400. The coupler location estimation and tracking system 160 uses standard CPU with or without the use of GPUs or graphics accelerators.

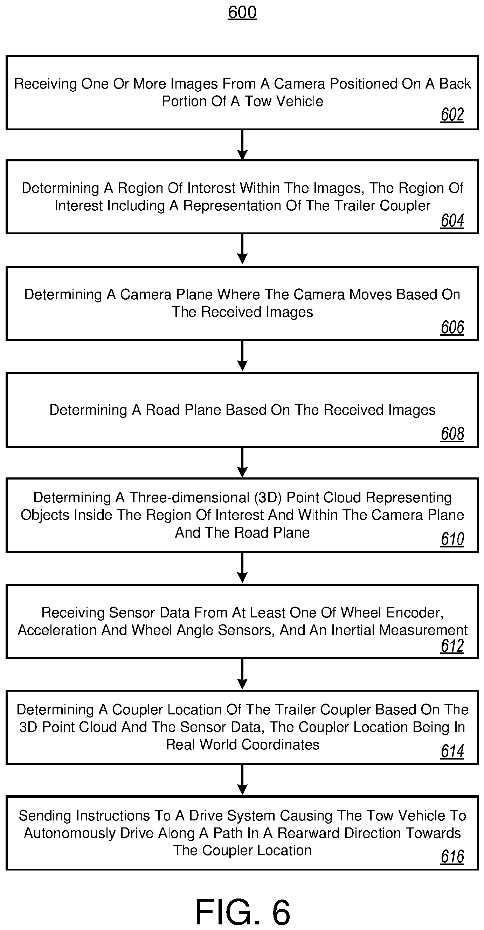

FIG. 6 provides an example arrangement of operations of a method 600 of detecting and localizing a coupler 212 of a trailer hitch 210 associated with a trailer 200 positioned behind a tow vehicle 100 using the system described in FIGS. 1-5.

At block 602, the method 600 includes receiving, at data processing hardware 152, one or more images 143 from a camera 142a positioned on a back portion of a tow vehicle 100 and in communication with the data processing hardware 152. At block 604, the method 600 includes determining, by the data processing hardware 152, a region of interest (ROI) 300 within the one or more images 143. The ROI 300 includes a representation of the trailer coupler 212. At block 606, the method 600 includes determining, by the data processing hardware 152, a camera plane 310 where the camera moves based on the received images 143. At block 608, the method 600 includes determining, by the data processing hardware 152, a road plane 320 based on the received images 143. At block 610, the method 600 includes determining, by the data processing hardware 152, a three-dimensional (3D) point cloud 400 representing objects inside the ROI 300 and within the camera plane 310 and the road plane 320. At block 612, the method 600 includes receiving, at the data processing hardware 152, sensor data 145 from at least one of wheel encoder 144, acceleration and wheel angle sensors 146, and an inertial measurement unit 148 in communication with the data processing hardware 152. At block 614, the method 600 includes determining, at the data processing hardware 152, a coupler location L_{TC} of the trailer coupler 212 based on the 3D point cloud 400 and the sensor data 145. The coupler location L_{TC} being in real world coordinates. At block 616, the method 600 includes sending, from the data processing hardware 152 to a drive system 110, instructions 190 causing the tow vehicle 100 to autonomously drive along a path in a rearward direction R towards the coupler location L_{TC}.

In some implementation, determining the ROI 300 within the images 143 includes: sending, from the data processing hardware 152 to a display 132, instructions to display the received images 143; and receiving, at the data processing hardware 152, a user selection 134 of the ROI 300.

The method 600 may also include projecting, by the data processing hardware 152, points 402 associated with the 3D point cloud 400 onto the camera plane 310 or the road plane 320. The method 600 may also include determining, by the data processing hardware 152, a distance between each point and the camera 142a. When the points associated with the 3D point cloud 400 are projected onto the camera plane 310, the method 600 includes determining the distance between each point and a center of the camera 142a. When the points 402 associated with the 3D point cloud 400 are projected onto the road plane 320, the method 600 includes, determining the distance between each point and a projection of the center of the camera onto the road plane. The method 600 may also include determining, by the data processing hardware 152, a shortest distance based on the determined distances. A projection of the 3D point associated with the shortest distance to the camera center onto the received images 143 is representative of a coupler pixel location within the images 143. The coupler location L_{TC} is based on the coupler pixel location. In some examples, the method 600 includes determining, by the data processing hardware 152, a coupler height H_{TC} based on a distance between the 3D point associated with the shortest distance and the road plane 320. The coupler location L_{TC} includes the coupler height H_{TC}.

In some implementations, the method 600 includes determining, by the data processing hardware 152, a first distance D_{CJ} between the trailer coupler 212 and the camera 142a based on the 3D point cloud 400. The method 600 also includes determining, by the data processing hardware 152, a second distance Dcc between the trailer coupler 212 and a vehicle tow ball 122 based on the first distance D_{CJ} less than a longitudinal distance D_{VCC} between the camera 142a and a vehicle hitch ball 122. The path is based on the second distance Dec.

In some examples, determining the 3D point cloud 400 of the ROI 300 includes executing one of a Visual Odometry (VO) algorithm, a Simultaneous Localization and Mapping (SLAM) algorithm, and a Structure from Motion (SfM) algorithm.

In some implementations, determining the camera plane 310 includes: determining at least three three-dimensional positions of the rear camera 142a from the received images 143; and determining the camera plane 310 based on the at least three three-dimensional positions. Determining the road plane 320 may include: determining a height of the camera from a road supporting the tow vehicle; and shifting the camera plane 310 by the height of the camera 142a toward the road 10.

In some examples, determining the road plane includes extracting at least three feature points from the images 143 including the road surface 10; associating a point of the 3D point cloud 400 with each of the feature points; and determining the road plane based on the at least three points of the 3D point cloud associated with the at least three feature points. In some examples, determining the camera plane includes determining a height of the camera from the road; and shifting the road plane by the height of the camera.

Various implementations of the systems and techniques described here can be realized in digital electronic circuitry, integrated circuitry, specially designed ASICs (application specific integrated circuits), computer hardware, firmware, software, and/or combinations thereof. These various implementations can include implementation in one or more computer programs that are executable and/or interpretable on a programmable system including at least one programmable processor, which may be special or general purpose, coupled to receive data and instructions from, and to transmit data and instructions to, a storage system, at least one input device, and at least one output device.

These computer programs (also known as programs, software, software applications, or code) include machine instructions for a programmable processor, and can be implemented in a high-level procedural and/or object-oriented programming language, and/or in assembly/machine language. As used herein, the terms "machine-readable medium" and "computer-readable medium" refer to any computer program product, apparatus and/or device (e.g., magnetic discs, optical disks, memory, Programmable Logic Devices (PLDs)) used to provide machine instructions and/or data to a programmable processor, including a machine-readable medium that receives machine instructions as a machine-readable signal. The term "machine-readable signal" refers to any signal used to provide machine instructions and/or data to a programmable processor.

Implementations of the subject matter and the functional operations described in this specification can be implemented in digital electronic circuitry, or in computer software, firmware, or hardware, including the structures disclosed in this specification and their structural equivalents, or in combinations of one or more of them. Moreover, subject matter described in this specification can be implemented as one or more computer program products, i.e., one or more modules of computer program instructions encoded on a computer readable medium for execution by, or to control the operation of, data processing apparatus. The computer readable medium can be a machine-readable storage device, a machine-readable storage substrate, a memory device, a composition of matter effecting a machine-readable propagated signal, or a combination of one or more of them. The terms "data processing apparatus", "computing device" and "computing processor" encompass all apparatus, devices, and machines for processing data, including by way of example a programmable processor, a computer, or multiple processors or computers. The apparatus can include, in addition to hardware, code that creates an execution environment for the computer program in question, e.g., code that constitutes processor firmware, a protocol stack, a database management system, an operating system, or a combination of one or more of them. A propagated signal is an artificially generated signal, e.g., a machine-generated electrical, optical, or electromagnetic signal that is generated to encode information for transmission to suitable receiver apparatus.

Similarly, while operations are depicted in the drawings in a particular order, this should not be understood as requiring that such operations be performed in the particular order shown or in sequential order, or that all illustrated operations be performed, to achieve desirable results. In certain circumstances, multi-tasking and parallel processing may be advantageous. Moreover, the separation of various system components in the embodiments described above should not be understood as requiring such separation in all embodiments, and it should be understood that the described program components and systems can generally be integrated together in a single software product or packaged into multiple software products.

A number of implementations have been described. Nevertheless, it will be understood that various modifications may be made without departing from the scope of the claims.

Accordingly, other implementations are within the scope of the following claims.

## Claims

1. A method of detecting and localizing a trailer coupler (212) of a trailer (200), the method comprising:
receiving, at data processing hardware (152), images (143) from a camera (142a) positioned on a back portion of a tow vehicle (100) and in communication with the data processing hardware (152);
determining, by the data processing hardware (152), a region of interest (300) within the images (143), the region of interest (300) including a representation of the trailer coupler (212); and
sending, from the data processing hardware (152) to a drive system (110), instructions (190) causing the tow vehicle (100) to autonomously drive along a path in a rearward direction (R) towards a coupler location (L_{TC}),
**characterized in that** the method further comprises:
determining, by the data processing hardware (152), a camera plane (310) where the camera (142a) moves based on the received images (143);
determining, by the data processing hardware (152), a road plane (320) based on the received images (143);
determining, by the data processing hardware (152), a three-dimensional (3D) point cloud (400) representing objects inside the region of interest (300) and within the camera plane (310) and the road plane (320);
receiving, at the data processing hardware (152), sensor data (145) from at least one of wheel encoder (144), acceleration and wheel angle sensors (146), and an inertial measurement unit (148) in communication with the data processing hardware (152);
determining, at the data processing hardware (152), the coupler location (L_{TC}) of the trailer coupler (212) based on the 3D point cloud (400) and the sensor data (145), the coupler location (L_{TC}) being in real world coordinates;
wherein the method further comprises:
projecting, by the data processing hardware (152), points (402) associated with the 3D point cloud (400) onto the camera plane (310) or the road plane (320);
determining, by the data processing hardware (152), a distance between each point (402) and the camera (142a):
when the points (402) associated with the 3D point cloud (400) are projected onto the camera plane (310), determining the distance between each point and a center of the camera; and
when the points (402) associated with the 3D point cloud (400) are projected onto the road plane (320), determining the distance between each point and a projection of the center of the camera onto the road plane (320); and
determining, by the data processing hardware (152), a shortest distance based on the determined distances, a projection of the 3D point associated with the shortest distance onto the received images (143) is representative of a coupler pixel location within the images (143), wherein the coupler location (L_{TC}) is based on the coupler pixel location.

2. The method of claim 1, wherein determining the region of interest (300) within the images (143) includes:
sending, from the data processing hardware (152) to a display (132), instructions to display the received images (143); and
receiving, at the data processing hardware (152), a user selection (134) of the region of interest (300).

3. The method of claim 1, further comprising:
determining, by the data processing hardware (152), a coupler height (H_{TC}) based on a distance between the 3D point (402) associated with the shortest distance and the road plane (320), wherein the coupler location (L_{TC}) includes the coupler height (H_{TC}).

4. The method of claim 1, further comprising:
determining, by the data processing hardware (152), a first distance (D_{CJ}) between the trailer coupler (212) and the camera (142a) based on the 3D point cloud (400); and
determining, by the data processing hardware (152), a second distance (Dcc) between the trailer coupler (212) and a vehicle tow ball (122) based on the first distance (D_{CJ}) less than a longitudinal distance (D_{VCC}) between the camera (142a) and a vehicle hitch ball (122);
wherein the path is based on the second distance (Dcc).

5. The method of claim 1, wherein determining the point cloud (400) of the region of interest (300) comprises executing one of a Visual Odometry (VO) algorithm, a Simultaneous Localization and Mapping (SLAM) algorithm, and a Structure from Motion (SfM) algorithm.

6. The method of claim 1, wherein determining the camera plane (310) comprises:
determining, by the data processing hardware (152), at least three three-dimensional positions of the rear camera (142a) from the received images (143); and
determining, by the data processing hardware (152), the camera plane (310) based on the at least three three-dimensional positions.

7. The method of claim 1, wherein determining the road plane (320) comprises:
determining a height of the camera from a road (10) supporting the tow vehicle (100); and
shifting the camera plane (310) by the height of the camera (142a).

8. The method of claim 1, wherein determining the road plane (320) comprises:
extracting, by the data processing hardware (152), at least three feature points from the images (143) including a road (10);
associating, by the data processing hardware (152), a point of the 3D point cloud (400) with each of the feature points; and
determining, by the data processing hardware (152), the road plane (320) based on the at least three points of the 3D point cloud (400) associated with the at least three feature points.

9. The method of claim 8, wherein determining the camera plane (320) comprises:
determining, by the data processing hardware (152), a height of the camera (142a) from the road (10); and
shifting, by the data processing hardware, the road plane (320) by the height of the camera (142a).

10. A system for detecting and localizing a trailer coupler (212) of a trailer (200), the system comprising:
data processing hardware (152); and
memory hardware (154) in communication with the data processing hardware (152), the memory hardware (154) storing instructions that when executed on the data processing hardware (152) cause the data processing hardware (152) to perform operations comprising:
receiving one or more images (143) from a camera (142a) positioned on a back portion of a tow vehicle (100) and in communication with the data processing hardware (152);
determining a region of interest (300) within the images (143), the region of interest (300) including a representation of the trailer coupler (212); and
sending instructions (190) to a drive system (110) causing the tow vehicle (100) to autonomously drive along a path in a rearward direction (R) towards a coupler location (L_{TC}),
**characterized in that** the operations further comprise:
determining a camera plane (310) where the camera (142a) moves based on the received images (143);
determining a road plane (320) based on the received images (143);
determining a three-dimensional (3D) point cloud (400) representing objects inside the region of interest (300) and within the camera plane (310) and the road plane (320);
receiving sensor data (145) from at least one of wheel encoder (144), acceleration and wheel angle sensors (146), and an inertial measurement unit (148) in communication with the data processing hardware (152);
determining a coupler location (L_{TC}) of the trailer coupler (212) based on the 3D point cloud (400) and the sensor data (145), the coupler location (L_{TC}) being in real world coordinates;
wherein the operations further comprise:
projecting points (402) associated with the 3D point cloud (400) onto the camera plane (310) or the road plane (320);
determining a distance between each point (402) and the camera (142a):
when the points (402) associated with the 3D point cloud (400) are projected onto the camera plane (310), determining the distance between each point and a center of the camera; and
when the points (402) associated with the 3D point cloud (400) are projected onto the road plane (320), determining the distance between each point and a projection of the center of the camera (142a) onto the road plane (320); and
determining a shortest distance based on the determined distances, a projection of the 3D point associated with the shortest distance onto the received images (143) is representative of coupler pixel location within the images (143), wherein the coupler location (L_{TC}) is based on the coupler pixel location.

11. The system of claim 10, wherein determining the region of interest (300) within the images (143) includes:
sending, instructions to a display (132) causing the display of the received images (143); and
receiving a user selection (134) of the region of interest (300).

12. The system of claim 10, wherein the operations further comprise:
determining a coupler height (H_{TC}) based on a distance between the 3D point associated with the shortest distance and the road plane (320), wherein the coupler location includes the coupler height (H_{TC}).

13. The system of claim 10, wherein the operations further comprise:
determining a first distance (D_{CJ}) between the trailer coupler (212) and the camera (142a) based on the 3D point cloud (400); and
determining a second distance (D_{CC}) between the trailer coupler (212) and a vehicle tow ball (122) based on the first distance (D_{CJ}) less than a longitudinal distance (D_{VCC}) between the camera (142a) and a vehicle hitch ball (122);
wherein the path is based on the second distance (Dcc).

14. The system of claim 10, wherein determining the 3D point cloud (400) of the region of interest (300) comprises executing one of a Visual Odometry (VO) algorithm, a Simultaneous Localization and Mapping (SLAM) algorithm, and a Structure from Motion (SfM) algorithm.

15. The system of claim 10, wherein determining the camera plane (320) comprises:
determining, by the data processing hardware (152), at least three three-dimensional positions of the rear camera (142a) from the received images (143); and
determining, by the data processing hardware (152), the camera plane (320) based on the at least three three-dimensional positions.

16. The system of claim 10, wherein determining the road plane (320) comprises:
determining a height of the camera (142a) from a road (10) supporting the tow vehicle (100); and
shifting the camera plane (310) by the height of the camera (142a).

17. The system of claim 10, wherein determining the road plane (320) comprises:
extracting at least three feature points from the images (143) including a road (10);
associating a point of the 3D point cloud (400) with each of the feature points; and
determining the road plane (320) based on the at least three points of the 3D point cloud (400) associated with the at least three feature points.

18. The system of claim 17, wherein determining the camera plane (320) comprises:
determining a height of the camera (142a) from the road (10); and
shifting the road plane (10) by the height of the camera (142a).

## Patentansprüche

1. Verfahren zum Erkennen und Lokalisieren einer Anhängerkupplung (212) eines Anhängers (200), wobei das Verfahren Folgendes umfasst:
Empfangen von Bildern (143) von einer Kamera (142a), die an einem hinteren Abschnitt eines Zugfahrzeugs (100) positioniert ist und in Kommunikation mit einer Datenverarbeitungs-Hardware steht (152), an der Datenverarbeitungs-Hardware (152),
Bestimmen eines Bereichs von Interesse (300) in den Bildern (143) durch die Datenverarbeitungs-Hardware (152), wobei der Bereich von Interesse (300) eine Darstellung der Anhängerkupplung (212) beinhaltet, und
Senden von Anweisungen (190), die das Zugfahrzeug (100) veranlassen, autonom auf einem Weg in einer Rückwärtsrichtung (R) hin zu einer Kupplungsposition (L_{TC}) zu fahren, von der Datenverarbeitungs-Hardware (152) an ein Antriebssystem (110),
**dadurch gekennzeichnet, dass** das Verfahren ferner Folgendes umfasst:
Bestimmen einer Kameraebene (310), in der sich die Kamera (142a) bewegt, durch die Datenverarbeitungs-Hardware (152) basierend auf den empfangenen Bildern (143),
Bestimmen einer Straßenebene (320) durch die Datenverarbeitungs-Hardware (152) basierend auf den empfangenen Bildern (143),
Bestimmen einer Dreidimensionen(3D)-Punktwolke (400), die Objekte innerhalb des Bereichs von Interesse (300) und in der Kameraebene (310) und der Straßenebene (320) darstellt, durch die Datenverarbeitungs-Hardware (152),
Empfangen von Sensordaten (145) an der Datenverarbeitungs-Hardware (152) von mindestens einem aus Drehgeber (144), Beschleunigungs- und Radwinkelsensoren (146) und einer Trägheits-Messeinheit (148) in Kommunikation mit der Datenverarbeitungs-Hardware (152),
Bestimmen der Kupplungsposition (L_{TC}) der Anhängerkupplung (312) durch die Datenverarbeitungs-Hardware (152) basierend auf der 3D-Punktwolke (400) und den Sensordaten (145), wobei die Kupplungsposition (L_{TC}) in Koordinaten der realen Welt angegeben ist,
wobei das Verfahren ferner Folgendes umfasst:
Projizieren von Punkten (402), die der 3D-Punktwolke (400) zugeordnet sind, auf die Kameraebene (310) oder die Straßenebene (320) durch die Datenverarbeitungs-Hardware (152),
Bestimmen eines Abstandes zwischen jedem Punkt (402) und der Kamera (142a) durch die Datenverarbeitungs-Hardware (152):
wenn die Punkte (402), die der 3D-Punktwolke (400) zugeordnet sind, auf die Kameraebene (310) projiziert werden, Bestimmen des Abstandes zwischen jedem Punkt und der Mitte der Kamera, und
wenn die Punkte (402), die der 3D-Punktwolke (400) zugeordnet sind, auf die Straßenebene (320) projiziert werden, Bestimmen des Abstandes zwischen jedem Punkt und einer Projektion der Mitte der Kamera auf die Straßenebene (320), und
Bestimmen des kürzesten Abstandes durch die Datenverarbeitungs-Hardware (152) basierend auf den bestimmten Abständen, wobei eine Projektion des 3D-Punktes, der dem kürzesten Abstand zugeordnet ist, auf die empfangenen Bilder (143) eine Darstellung einer Kupplungspixelposition in den Bildern (143) ist, wobei die Kupplungsposition (L_{TC}) auf der Kupplungspixelposition basiert.

2. Verfahren nach Anspruch 1, wobei das Bestimmen des Bereichs von Interesse (300) in den Bildern (143) Folgendes beinhaltet:
Senden von Anweisungen zum Anzeigen der empfangenen Bilder (143) von der Datenverarbeitungs-Hardware (152) an eine Anzeige (132) und
Empfangen einer Benutzerauswahl (134) des Bereichs von Interesse (300) an der Datenverarbeitungs-Hardware (152).

3. Verfahren nach Anspruch 1, ferner Folgendes umfassend:
Bestimmen einer Kupplungshöhe (H_{TC}) durch die Datenverarbeitungs-Hardware (152) basierend auf einem Abstand zwischen dem 3D-Punkt (402), der dem kürzesten Abstand zugeordnet ist, und der Straßenebene (320), wobei die Kupplungsposition (L_{TC}) die Kupplungshöhe (H_{TC}) beinhaltet.

4. Verfahren nach Anspruch 1, ferner Folgendes umfassend:
Bestimmen eines ersten Abstandes (D_{CJ}) zwischen der Anhängerkupplung (212) und der Kamera (142a) durch die Datenverarbeitungs-Hardware (152) basierend auf der 3D-Punktwolke (400), und
Bestimmen eines zweiten Abstandes (Dcc) zwischen der Anhängerkupplung (212) und einem Fahrzeugkugelkopf (122) durch die Datenverarbeitungs-Hardware (152) basierend auf dem ersten Abstand (D_{CJ}), der kleiner als ein Abstand (Dvcc) in Längsrichtung zwischen der Kamera (142a) und einer Fahrzeugkugelpfanne (122) ist,
wobei der Weg auf dem zweiten Abstand (Dcc) basiert.

5. Verfahren nach Anspruch 1, wobei das Bestimmen der Punktwolke (400) des Bereichs von Interesse (300) das Ausführen eines aus einem Algorithmus für Visuelle Odometrie (VO), einem Algorithmus für Lokalisierung und gleichzeitiges Abbilden (SLAM) und einem Algorithmus für Struktur aus Bewegung (SfM) umfasst.

6. Verfahren nach Anspruch 1, wobei das Bestimmen der Kameraebene (310) Folgendes umfasst:
Bestimmen mindestens dreier dreidimensionaler Stellungen der hinteren Kamera (142a) aus den empfangenen Bildern (143) durch die Datenverarbeitungs-Hardware (152) und
Bestimmen der Kameraebene (310) durch die Datenverarbeitungs-Hardware (152) basierend auf den mindestens drei dreidimensionalen Stellungen.

7. Verfahren nach Anspruch 1, wobei das Bestimmen der Straßenebene (320) Folgendes umfasst:
Bestimmen einer Höhe der Kamera über einer Straße (10), die das Zugfahrzeug (100) trägt, und
Verlagern der Kameraebene (310) um die Höhe der Kamera (142a).

8. Verfahren nach Anspruch 1, wobei das Bestimmen der Straßenebene (320) Folgendes umfasst:
Extrahieren mindestens dreier Merkmalpunkte aus den Bildern (143), die eine Straße (10) beinhalten, durch die Datenverarbeitungs-Hardware (152),
Zuordnen eines Punktes der 3D-Punktwolke (400) zu einem jeweiligen der Merkmalpunkte durch die Datenverarbeitungs-Hardware (152) und
Bestimmen der Straßenebene (320) durch die Datenverarbeitungs-Hardware (152) basierend auf den mindestens drei Punkten der 3D-Punktwolke (400), die den mindestens drei Merkmalpunkten zugeordnet sind.

9. Verfahren nach Anspruch 8, wobei das Bestimmen der Kameraebene (320) Folgendes umfasst:
Bestimmen einer Höhe der Kamera (142a) über der Straße (10) durch die Datenverarbeitungs-Hardware (152) und
Verlagern der Straßenebene (320) um die Höhe der Kamera (142a) durch die Datenverarbeitungs-Hardware (152).

10. System zum Erkennen und Lokalisieren einer Anhängerkupplung (212) eines Anhängers (200), wobei das System Folgendes umfasst:
Datenverarbeitungs-Hardware (152) und
Speicher-Hardware (154) in Kommunikation mit der Datenverarbeitungs-Hardware (152), wobei die Speicher-Hardware (154) Anweisungen speichert, die, wenn sie auf der Datenverarbeitungs-Hardware (152) ausgeführt werden, die Datenverarbeitungs-Hardware (152) veranlassen, Operationen durchzuführen, die Folgendes umfassen:
Empfangen eines oder mehrerer Bilder (143) von einer Kamera (142a), die an einem hinteren Abschnitt eines Zugfahrzeugs (100) positioniert ist und in Kommunikation mit einer Datenverarbeitungs-Hardware (152) steht,
Bestimmen eines Bereichs von Interesse (300) in den Bildern (143), wobei der Bereich von Interesse (300) eine Darstellung der Anhängerkupplung (212) beinhaltet, und
Senden von Anweisungen (190), die das Zugfahrzeug (100) veranlassen, autonom auf einem Weg in einer Rückwärtsrichtung (R) hin zu einer Kupplungsposition (L_{TC}) zu fahren, an ein Antriebssystem (110),
**dadurch gekennzeichnet, dass** die Operationen ferner Folgendes umfassen:
Bestimmen einer Kameraebene (310), in der sich die Kamera (142a) bewegt, basierend auf den empfangenen Bildern (143),
Bestimmen einer Straßenebene (320) basierend auf den empfangenen Bildern,
Bestimmen einer Dreidimensionen(3D)-Punktwolke (400), die Objekte innerhalb des Bereichs von Interesse (300) und in der Kameraebene (310) und der Straßenebene (320) darstellt,
Empfangen von Sensordaten (145) von mindestens einem aus Drehgeber (144), Beschleunigungs- und Radwinkelsensoren (146) und einer Trägheits-Messeinheit (148) in Kommunikation mit der Datenverarbeitungs-Hardware (152),
Bestimmen einer Kupplungsposition (L_{TC}) der Anhängerkupplung (312) basierend auf der 3D-Punktwolke (400) und den Sensordaten (145), wobei die Kupplungsposition (L_{TC}) in Koordinaten der realen Welt angegeben ist,
wobei die Operationen ferner Folgendes umfassen:
Projizieren von Punkten (402), die der 3D-Punktwolke (400) zugeordnet sind, auf die Kameraebene (310) oder die Straßenebene (320),
Bestimmen eines Abstandes zwischen jedem Punkt (402) und der Kamera (142a):
wenn die Punkte (402), die der 3D-Punktwolke (400) zugeordnet sind, auf die Kameraebene (310) projiziert werden, Bestimmen des Abstandes zwischen jedem Punkt und der Mitte der Kamera, und
wenn die Punkte (402), die der 3D-Punktwolke (400) zugeordnet sind, auf die Straßenebene (320) projiziert werden, Bestimmen des Abstandes zwischen jedem Punkt und einer Projektion der Mitte der Kamera auf die Straßenebene (320), und
Bestimmen eines kürzesten Abstandes basierend auf den bestimmten Abständen, wobei eine Projektion des 3D-Punktes, der dem kürzesten Abstand zugeordnet ist, auf die empfangenen Bilder (143) eine Darstellung einer Kupplungspixelposition in den Bildern (143) ist, wobei die Kupplungsposition (L_{TC}) auf der Kupplungspixelposition basiert.

11. System nach Anspruch 10, wobei das Bestimmen des Bereichs von Interesse (300) in den Bildern (143) Folgendes beinhaltet:
Senden von Anweisungen, die das Anzeigen der empfangenen Bilder (143) veranlassen, an eine Anzeige (132) und
Empfangen einer Benutzerauswahl (134) des Bereichs von Interesse (300).

12. System nach Anspruch 10, wobei die Operationen ferner Folgendes umfassen:
Bestimmen einer Kupplungshöhe (H_{TC}) basierend auf einem Abstand zwischen dem 3D-Punkt, der dem kürzesten Abstand zugeordnet ist, und der Straßenebene (320), wobei die Kupplungsposition die Kupplungshöhe (H_{TC}) beinhaltet.

13. System nach Anspruch 10, wobei die Operationen ferner Folgendes umfassen:
Bestimmen eines ersten Abstandes (D_{CJ}) zwischen der Anhängerkupplung (212) und der Kamera (142a) basierend auf der 3D-Punktwolke (400), und
Bestimmen eines zweiten Abstandes (Dcc) zwischen der Anhängerkupplung (212) und einem Fahrzeugkugelkopf (122) basierend auf dem ersten Abstand (D_{CJ}), der kleiner als ein Abstand (Dvcc) in Längsrichtung zwischen der Kamera (142a) und einer Fahrzeugkugelpfanne (122) ist,
wobei der Weg auf dem zweiten Abstand (Dcc) basiert.

14. System nach Anspruch 10, wobei das Bestimmen der 3D-Punktwolke (400) des Bereichs von Interesse (300) das Ausführen eines aus einem Algorithmus für Visuelle Odometrie (VO), einem Algorithmus für Lokalisierung und gleichzeitiges Abbilden (SLAM) und einem Algorithmus für Struktur aus Bewegung (SfM) umfasst.

15. System nach Anspruch 10, wobei das Bestimmen der Kameraebene (320) Folgendes umfasst:
Bestimmen mindestens dreier dreidimensionaler Stellungen der hinteren Kamera (142a) aus den empfangenen Bildern (143) durch die Datenverarbeitungs-Hardware (152), und
Bestimmen der Kameraebene (310) durch die Datenverarbeitungs-Hardware (152) basierend auf den mindestens drei dreidimensionalen Stellungen.

16. System nach Anspruch 10, wobei das Bestimmen der Straßenebene (320) Folgendes umfasst:
Bestimmen einer Höhe der Kamera (142a) über einer Straße (10), die das Zugfahrzeug (100) trägt, und
Verlagern der Kameraebene (310) um die Höhe der Kamera (142a).

17. System nach Anspruch 10, wobei das Bestimmen der Straßenebene (320) Folgendes umfasst:
Extrahieren mindestens dreier Merkmalpunkte aus den Bildern (143), die eine Straße (10) beinhalten,
Zuordnen eines Punktes der 3D-Punktwolke (400) zu einem jeweiligen der Merkmalpunkte und
Bestimmen der Straßenebene (320) basierend auf den mindestens drei Punkten der 3D-Punktwolke (400), die den mindestens drei Merkmalpunkten zugeordnet sind.

18. System nach Anspruch 17, wobei das Bestimmen der Kameraebene (320) Folgendes umfasst:
Bestimmen einer Höhe der Kamera (142a) über der Straße (10) und
Verlagern der Straßenebene (10) um die Höhe der Kamera (142a).

## Revendications

1. Procédé de détection et de localisation d'un élément d'accouplement (212) de remorque d'une remorque (200), le procédé comprenant :
la réception, au niveau d'un matériel de traitement de données (152), d'images (143) provenant d'une caméra (142a) positionnée sur une partie de derrière d'un véhicule de remorquage (100) et en communication avec le matériel de traitement de données (152) ;
la détermination, par le matériel de traitement de données (152), d'une région d'intérêt (300) au sein des images (143), la région d'intérêt (300) comportant une représentation de l'élément d'accouplement (212) de remorque ; et
l'envoi, du matériel de traitement de données (152) à un système de conduite (110), d'instructions (190) amenant le véhicule de remorquage (100) à rouler de façon autonome le long d'une trajectoire en marche arrière (R) vers une localisation d'élément d'accouplement (L_{TC}),
le procédé étant **caractérisé en ce qu'**il comprend en outre :
la détermination, par le matériel de traitement de données (152), d'un plan de caméra (310) dans lequel la caméra (142a) se déplace sur la base des images (143) reçues ;
la détermination, par le matériel de traitement de données (152), d'un plan de route (320) sur la base des images (143) reçues ;
la détermination, par le matériel de traitement de données (152), d'un nuage (400) de points tridimensionnels (3D) représentant des objets au sein de la région d'intérêt (300) et au sein du plan de caméra (310) et du plan de route (320) ;
la réception, au niveau du matériel de traitement de données (152), de données capteurs (145) provenant d'un codeur de roue (144) et/ou de capteurs d'accélération et d'angle de roue (146) et/ou d'une unité de mesure inertielle (148) en communication avec le matériel de traitement de données (152) ;
la détermination, au niveau du matériel de traitement de données (152), de la localisation d'élément d'accouplement (L_{TC}) de l'élément d'accouplement (212) de remorque sur la base du nuage (400) de points 3D et des données capteurs (145), la localisation d'élément d'accouplement (L_{TC}) étant donnée en coordonnées dans le monde réel ;
le procédé comprenant en outre :
la projection, par le matériel de traitement de données (152), de points (402) associés au nuage (400) de points 3D sur le plan de caméra (310) ou sur le plan de route (320) ;
la détermination, par le matériel de traitement de données (152), d'une distance entre chaque point (402) et la caméra (142a) :
lorsque les points (402) associés au nuage (400) de points 3D sont projetés sur le plan de caméra (310), la détermination de la distance entre chaque point et le centre de la caméra ; et
lorsque les points (402) associés au nuage (400) de points 3D sont projetés sur le plan de route (320), la détermination de la distance entre chaque point et une projection du centre de la caméra sur le plan de route (320) ; et
la détermination, par le matériel de traitement de données (152), d'une plus courte distance sur la base des distances déterminées, une projection du point 3D associé à la plus courte distance sur les images (143) reçues représentant une localisation de pixels d'élément d'accouplement au sein des images (143), la localisation d'élément d'accouplement (L_{TC}) étant basée sur la localisation de pixels d'élément d'accouplement.

2. Procédé selon la revendication 1, dans lequel la détermination de la région d'intérêt (300) au sein des images (143) comporte :
l'envoi, du matériel de traitement de données (152) à un affichage (132), d'instructions pour afficher les images (143) reçues ; et
la réception, au niveau du matériel de traitement de données (152), d'une sélection (134) par un utilisateur de la région d'intérêt (300).

3. Procédé selon la revendication 1, comprenant en outre :
la détermination, par le matériel de traitement de données (152), d'une hauteur d'élément d'accouplement (H_{TC}) sur la base d'une distance entre le point 3D (402) associé à la plus courte distance et le plan de route (320), la localisation d'élément d'accouplement (L_{TC}) comportant la hauteur d'élément d'accouplement (HTC).

4. Procédé selon la revendication 1, comprenant en outre :
la détermination, par le matériel de traitement de données (152), d'une première distance (D_{CJ}) entre l'élément d'accouplement (212) de remorque et la caméra (142a) sur la base du nuage (400) de points 3D ; et
la détermination, par le matériel de traitement de données (152), d'une deuxième distance (Dcc) entre l'élément d'accouplement (212) de remorque et une boule de remorquage (122) de véhicule sur la base de la première distance (D_{CJ}) minorée d'une distance longitudinale (Dvcc) entre la caméra (142a) et une boule d'attelage (122) de véhicule ;
la trajectoire étant basée sur la deuxième distance (Dec).

5. Procédé selon la revendication 1, dans lequel la détermination du nuage (400) de points de la région d'intérêt (300) comprend l'exécution d'un algorithme parmi un algorithme d'odométrie visuelle (VO), un algorithme de localisation et cartographie simultanées (SLAM) et un algorithme de structure à partir du mouvement (SfM).

6. Procédé selon la revendication 1, dans lequel la détermination du plan de caméra (310) comprend :
la détermination, par le matériel de traitement de données (152), d'au moins trois positions tridimensionnelles de la caméra arrière (142a) à partir des images (143) reçues ; et
la détermination, par le matériel de traitement de données (152), du plan de caméra (310) sur la base des au moins trois positions tridimensionnelles.

7. Procédé selon la revendication 1, dans lequel la détermination du plan de route (320) comprend :
la détermination d'une hauteur de la caméra par rapport à une route (10) supportant le véhicule de remorquage (100) ; et
le déplacement du plan de caméra (310) de la hauteur de la caméra (142a).

8. Procédé selon la revendication 1, dans lequel la détermination du plan de route (320) comprend :
l'extraction, par le matériel de traitement de données (152), d'au moins trois points caractéristiques à partir des images (143) comportant une route (10) ;
l'association, par le matériel de traitement de données (152), d'un point du nuage (400) de points 3D à chacun des points caractéristiques ; et
la détermination, par le matériel de traitement de données (152), du plan de route (320) sur la base des au moins trois points du nuage (400) de points 3D associés aux au moins trois points caractéristiques.

9. Procédé selon la revendication 8, dans lequel la détermination du plan de caméra (320) comprend :
la détermination, par le matériel de traitement de données (152), d'une hauteur de la caméra (142a) par rapport à la route (10) ; et
le déplacement, par le matériel de traitement de données (152), du plan de route (320) de la hauteur de la caméra (142a).

10. Système de détection et de localisation d'un élément d'accouplement (212) de remorque d'une remorque (200), le système comprenant :
un matériel de traitement de données (152) ; et
un matériel de mémoire (154) en communication avec le matériel de traitement de données (152), le matériel de mémoire (154) stockant des instructions qui, lorsqu'elles s'exécutent sur le matériel de traitement de données (152), amènent le matériel de traitement de données (152) à réaliser des opérations comprenant :
la réception d'une ou de plusieurs images (143) provenant d'une caméra (142a) positionnée sur une partie de derrière d'un véhicule de remorquage (100) et en communication avec le matériel de traitement de données (152) ;
la détermination d'une région d'intérêt (300) au sein des images (143), la région d'intérêt (300) comportant une représentation de l'élément d'accouplement (212) de remorque ; et
l'envoi, à un système de conduite (110), d'instructions (190) amenant le véhicule de remorquage (100) à rouler de façon autonome le long d'une trajectoire en marche arrière (R) vers une localisation d'élément d'accouplement (LTC),
**caractérisé en ce que** les opérations comprennent en outre :
la détermination d'un plan de caméra (310) dans lequel la caméra (142a) se déplace sur la base des images (143) reçues ;
la détermination d'un plan de route (320) sur la base des images (143) reçues ;
la détermination d'un nuage (400) de points tridimensionnels (3D) représentant des objets au sein de la région d'intérêt (300) et au sein du plan de caméra (310) et du plan de route (320) ;
la réception de données capteurs (145) provenant d'un codeur de roue (144) et/ou de capteurs d'accélération et d'angle de roue (146) et/ou d'une unité de mesure inertielle (148) en communication avec le matériel de traitement de données (152) ;
la détermination d'une localisation d'élément d'accouplement (L_{TC}) de l'élément d'accouplement (212) de remorque sur la base du nuage (400) de points 3D et des données capteurs (145), la localisation d'élément d'accouplement (L_{TC}) étant donnée en coordonnées dans le monde réel ;
les opérations comprenant en outre :
la projection de points (402) associés au nuage (400) de points 3D sur le plan de caméra (310) ou sur le plan de route (320) ;
la détermination d'une distance entre chaque point (402) et la caméra (142a) :
lorsque les points (402) associés au nuage (400) de points 3D sont projetés sur le plan de caméra (310), la détermination de la distance entre chaque point et le centre de la caméra ; et
lorsque les points (402) associés au nuage (400) de points 3D sont projetés sur le plan de route (320), la détermination de la distance entre chaque point et une projection du centre de la caméra (142a) sur le plan de route (320) ; et
la détermination d'une plus courte distance sur la base des distances déterminées, une projection du point 3D associé à la plus courte distance sur les images (143) reçues représentant une localisation de pixels d'élément d'accouplement au sein des images (143), la localisation d'élément d'accouplement (L_{TC}) étant basée sur la localisation de pixels d'élément d'accouplement.

11. Système selon la revendication 10, dans lequel la détermination de la région d'intérêt (300) au sein des images (143) comporte :
l'envoi, à un affichage (132), d'instructions provoquant l'affichage des images (143) reçues ; et
la réception d'une sélection (134) par un utilisateur de la région d'intérêt (300).

12. Système selon la revendication 10, dans lequel les opérations comprennent en outre :
la détermination d'une hauteur d'élément d'accouplement (H_{TC}) sur la base d'une distance entre le point 3D (402) associé à la plus courte distance et le plan de route (320), la localisation d'élément d'accouplement comportant la hauteur d'élément d'accouplement (H_{TC}).

13. Système selon la revendication 10, dans lequel les opérations comprennent en outre :
la détermination d'une première distance (D_{CJ}) entre l'élément d'accouplement (212) de remorque et la caméra (142a) sur la base du nuage (400) de points 3D ; et
la détermination d'une deuxième distance (Dcc) entre l'élément d'accouplement (212) de remorque et une boule de remorquage (122) de véhicule sur la base de la première distance (D_{CJ}) minorée d'une distance longitudinale (Dvcc) entre la caméra (142a) et une boule d'attelage (122) de véhicule ;
la trajectoire étant basée sur la deuxième distance (Dec).

14. Système selon la revendication 10, dans lequel la détermination du nuage (400) de points 3D de la région d'intérêt (300) comprend l'exécution d'un algorithme parmi un algorithme d'odométrie visuelle (VO), un algorithme de localisation et cartographie simultanées (SLAM) et un algorithme de structure à partir du mouvement (SfM).

15. Système selon la revendication 10, dans lequel la détermination du plan de caméra (310) comprend :
la détermination, par le matériel de traitement de données (152), d'au moins trois positions tridimensionnelles de la caméra arrière (142a) à partir des images (143) reçues ; et
la détermination, par le matériel de traitement de données (152), du plan de caméra (320) sur la base des au moins trois positions tridimensionnelles.

16. Système selon la revendication 10, dans lequel la détermination du plan de route (320) comprend :
la détermination d'une hauteur de la caméra (142a) par rapport à une route (10) supportant le véhicule de remorquage (100) ; et
le déplacement du plan de caméra (310) de la hauteur de la caméra (142a).

17. Système selon la revendication 10, dans lequel la détermination du plan de route (320) comprend :
l'extraction d'au moins trois points caractéristiques à partir des images (143) comportant une route (10) ;
l'association d'un point du nuage (400) de points 3D à chacun des points caractéristiques ; et
la détermination du plan de route (320) sur la base des au moins trois points du nuage (400) de points 3D associés aux au moins trois points caractéristiques.

18. Système selon la revendication 17, dans lequel la détermination du plan de caméra (320) comprend :
la détermination d'une hauteur de la caméra (142a) par rapport à la route (10) ; et
le déplacement du plan de route (10) de la hauteur de la caméra (142a).
